# EUROPEAN PATENT SPECIFICATION

(11) **EP 3 910 225 B1**
(45) Date of publication and mention of the grant of the patent: **25.10.2023**
(21) Application number: 19923249.7
(22) Date of filing: 01.04.2019
(51) Int. Cl.: F16L 37/092

(54) **PIPE JOINT APPARATUS**
ROHRVERBINDUNGSVORRICHTUNG
APPAREIL DE RACCORD DE TUYAU

(43) Date of publication of application: 17.11.2021
(73) Proprietor: Jointop Co., Ltd., Paju-si, Gyeonggi-do 10858 (KR)
(72) Inventor: LEE, Joo-Hun, Seoul 06600 (KR); SON, Su-Hyoung, Paju-si Gyeonggi-do 10819 (KR)
(74) Representative: Lermer, Christoph
(86) International application number: PCT/KR2019/003778
(87) International publication number: WO 2020/204217

(56) References cited:
- WO-A2-2009/051431
- JP-A- 2009 047 190
- KR-A- 20090 039 630
- KR-A- 20090 131 519
- KR-A- 20090 131 519
- KR-A- 20130 126 728
- KR-A- 20180 017 966
- US-A1- 2011 278 835

## Description

### Technical Field

The present disclosure relates to a pipe joint apparatus (pipe connection) for connecting and fixing pipes to each other, and more particularly, to a pipe joint apparatus including a jaw for pipe connection, which can provide one-touch attachment/detachment and insertion, improve a pipe interference structure, increase a tensile force further than in the related art, and improve corrosion resistance and hardness.

### Background Art

Houses or buildings are equipped with pipes to supply water, gas and the like. Since such pipes have a limited length due to a limitation in manufacturing process, unit pipes which are manufactured to have a predetermined length are connected for construction. As a connection means for connecting the respective unit pipes, a pipe connection is used. Such a pipe connection is mainly used as a means for connecting and fixing a pipe and a pipe on a pipe line through which fluid flows, and maintaining the airtightness of the pipes. Depending on the structural shape of the pipe connection, the pipe connection is divided into various pipe connections such as a straight pipe connection, an elbow-shaped pipe connection, a T-shaped pipe connection and a cross-shape pipe connection.

In particular, the pipe connection has a jaw holder and a jaw mounted on the jaw holder such that a pipe is not separated from the pipe connection but fixed to the pipe connection, while the pipe is inserted into the pipe connection. Such a jaw has a plurality of blades which serve to press the outer surface of the pipe such that the pipe is not separated from the pipe connection.

The convention jaw has a problem in that the outer surface of a pipe is scratched while the pipe is brought into surface contact with the jaw at a right angle, when the pipe is inserted into the jaw. When the pipe is inserted into the jaw, the interference between the jaw and the pipe may cause damage to the pipe. In a severe case, the interference may cause the corrosion of the pipe and a leakage accident. Thus, the interference must be removed.

Furthermore, when the convention jaw is damaged due to corrosion or hardness reduction, the jaw may lose its own function. In this case, the pipe may be separated from the pipe connection by a tensile force or water pressure.

The related art of the jaw is disclosed in Korean Patent Application Publication No. 10-2009-0131519 (published on December 29, 2009) which is a prior patent of the present applicant.

Besides, WO 2009/051431 A2 describes an apparatus and method for interconnecting pipes, and a method for manufacturing a jaw of a jaw holder.

### DISCLOSURE

### Technical Problem

Various embodiments are directed to a pipe joint apparatus which can provide one-touch attachment/detachment and insertion, remove the interference between a jaw and a pipe, prevent a scratch of a pipe by the jaw, and prevent a leakage accident by damage to a pipe.

Also, various embodiments are directed to a pipe joint apparatus which can prevent corrosion or hardness reduction of a pipe by insertion and attachment/detachment, a loss of function by damage to a jaw, and separation of a pipe by a tensile force or water pressure.

Further, various embodiments are directed to a pipe joint apparatus including a jaw which can maximize the tensile force of a pipe, and have superior corrosion resistance, hardness and reliability, compared to a conventional jaw.

### Technical Solution

In an embodiment, there is provided a pipe joint apparatus including an insertion part into which a pipe is inserted and a jaw which is mounted on a jaw holder, disposed to surround the circumference of the insertion part, and configured to fix the pipe by tightening the outer surface of the pipe. The jaw may include: a body part coupled to the jaw holder; a blade part provided on one side of the body part, and including a plurality of blades; a chamfered part provided at the front of the blade part, and chamfered at a predetermined angle; and a front surface part connected to the chamfered part, and formed perpendicular to the insertion direction of the pipe.

The chamfered part may have a chamfer angle equal to the angle between the end and valley of the blade.

The chamfered part may be chamfered at an angle of 30° with respect to the end of the blade part.

The jaw may further include a coating part formed on the outer surfaces of the body part, the blade part and the front surface part. The coating part may include a first coating layer made of zinc (Zn), a second coating layer stacked on the first coating layer and made of an alloy of Zn and copper (Cu), a third coating layer stacked on the second coating layer and made of Cu, and a fourth coating layer stacked on the third coating layer and made of nickel (Ni) .

The thicknesses of the first to fourth coating layers may satisfy the following condition: [thickness of first coating layer : thickness of second coating layer : thickness of third coating layer : thickness of fourth coating layer = 100 : 10 to 20 : 60 to 70 : 20 to 30].

The jaw may further include a tapered part provided at the top of the body part. The tapered part may have an inclination angle of 6 to 10°.

### Advantageous Effects

In accordance with the embodiments of the present disclosure, the pipe joint apparatus may provide one-touch attachment/detachment and insertion of a pipe, and prevent the interference between the jaw and a pipe and a scratch of the pipe, through the chamfered part formed on a part of the front surface part, when the pipe is inserted into the jaw.

Furthermore, the unique structures of the chamfered part and the blade part can maximize the tensile force of a pipe, compared to the conventional jaw.

Furthermore, it is possible to provide the pipe joint apparatus having the jaw which can prevent corrosion or hardness reduction of the jaw through the coating part having a unique composition, even though a pipe is repeatedly attached/detached, and thus has excellent corrosion resistance, hardness and reliability.

### Brief Description of Drawings

FIGS. 1A to 1C are diagrams illustrating embodiments of a pipe joint apparatus in accordance with the present disclosure, wherein FIGS. 1A and 1B illustrate a pipe joint apparatus in accordance with a first embodiment and FIG. 1C illustrates a pipe joint apparatus in accordance with a second embodiment.
FIG. 2 is a side view illustrating a jaw in accordance with the present disclosure.
FIG. 3 is a graph showing experimental data for verifying an effect obtained by limiting a taper angle.
FIG. 4 is a diagram illustrating an embodiment of a coating part.
FIGS. 5A and 5B are photographs comparatively showing experimental results for verifying an effect of the coating part.
FIG. 6 is a table comparatively showing experimental results for verifying the effect of the coating part.
FIGS. 7A and 7B are graphs illustrating a difference in tensile force between jaws depending on a jaw manufacturing method.

### Mode for Invention

The present disclosure may be modified in various manners and have various embodiments. Thus, aspects or embodiments of the present disclosure will be described in detail in the detailed description of the present disclosure. However, the aspects or embodiments of the present disclosure do not intend to limit the present disclosure to the specific embodiments, and it should be understood that the aspects or embodiments include all modifications, equivalents and substitutions without departing from the sprit and scope of the present disclosure.

The terms used in this specification are used only to describe a specific aspect or embodiment, and do not intend to limit the present disclosure. The terms of a singular form may include plural forms unless clearly referred to the contrary. In this specification, the meaning of "include" or "composed of" specifies the existence of a property, a number, a step, an operation, an element, a component, or combinations thereof, but does not exclude the existence or addition possibility of one or more other properties, numbers, steps, operations, elements, components, or combinations thereof.

All terms used herein, which include technical or scientific terms, have the same meanings as those generally understood by those skilled in the art to which the present disclosure pertains, unless differently defined. The terms defined in a generally used dictionary may be construed to have meanings which coincide with contextual meanings in the related art. Unless clearly defined in this specification, the terms may not be construed as ideal or excessively formal meanings.

In the present disclosure, the terms such as first and second are only used to distinguish between different components, and are used regardless of the order in which the components are manufactured. The names of the components in the detailed descriptions may not coincide with those in the claims.

The present disclosure relates to a pipe joint apparatus (pipe connection) which connects and fixes pipes to each other, and includes a jaw for pipe connection, which can provide one-touch attachment/detachment and insertion.

Hereafter, the pipe joint apparatus (hereafter, referred to as the present apparatus C) including a jaw for pipe connection (hereafter, referred to as the present jaw J) in accordance with the present disclosure will be described in detail with reference to the accompanying drawings.

The pipe joint apparatus (or pipe connection) in accordance with the present disclosure has both open ends through which two pipes can be inserted and connected to each other. The structures around both open ends of the pipe joint apparatus are the same as each other, and the inserted pipes are assembled, fixed and supported inside the pipe joint apparatus. Furthermore, the pipe inserted into the pipe joint apparatus may be separated from the apparatus by a separation member referred to as a remover, or through an operation of pressing a jaw holder.

The present disclosure relates to a structure configured by improving a jaw for pipe connection among components of the pipe joint apparatus. Thus, the detailed descriptions of the pipe joint apparatus will be omitted herein, and the detailed configuration of the pipe joint apparatus may be understood with reference to Korean Patent No. 10-1905607 (registered on October 1, 2018) which is a prior patent of the present applicant.

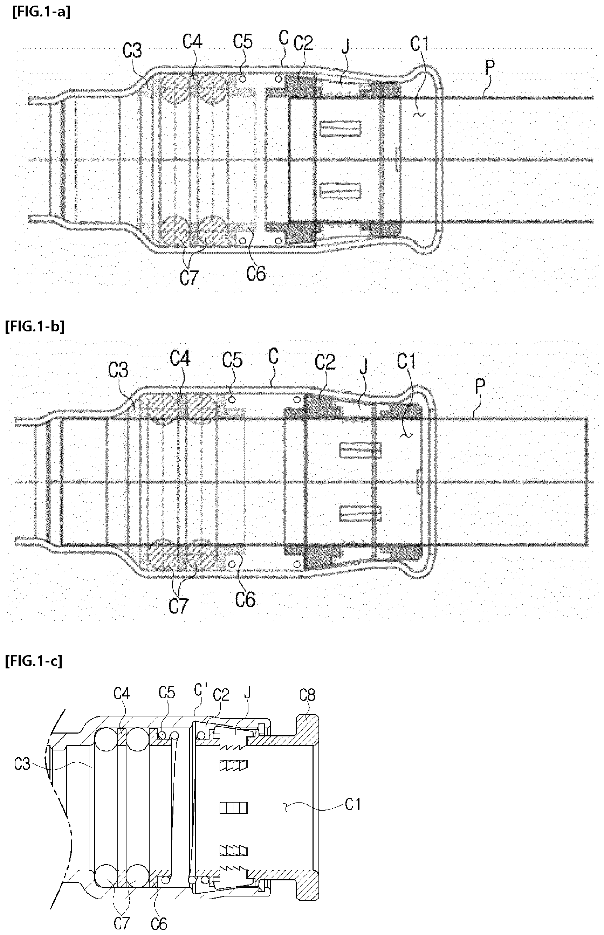

Before the present jaw J is described, the configuration and structure of the present apparatus C to which the present jaw J is applied will be described as follows. As illustrated in FIGS. 1A and 1B, the present apparatus C in accordance with a first embodiment includes an insertion part, a jaw holder C2, a primary backup ring C3, a secondary backup ring C4, a spring C5, a spring guide C6 and an O-ring C7. A pipe P is inserted into the insertion part. The jaw holder C2 is disposed in the insertion part so as to surround the circumference of the insertion part. The primary backup ring C3, the secondary backup ring C4, the spring C5, the spring guide C6 and the O-ring C7 are installed in the insertion part.

Among the components, the insertion part indicates the space into which the pipe P is inserted, and has a shape corresponding to the shape of the pipe P. In general, the insertion part may have a circular shape or a polygonal shape such as a rectangle, depending on the shape of the pipe P. Furthermore, the jaw holder C2, the primary backup ring C3, the secondary backup ring C4, the spring C5, the spring guide C6 and the O-ring C7 all have a circular shape or polygonal shape corresponding to the shape of the insertion part.

The jaw holder C2 is provided at the front end of the insertion part and disposed in a shape to surround the circumference of the insertion part, and has a mounting part in the center thereof, such that the present jaw J is inserted into the mounting part. As illustrated in FIGS. 1A and 1B, the mounting part is formed as a space whose one side is open so that the pipe P is held by the present jaw J.

The primary backup ring C3 serves to support the front end of the pipe P. As illustrated in FIG. 1A, the primary backup ring C3 is provided at the rear end of the insertion part, and has a mounting part into which the pipe P is inserted.

The secondary backup ring C4 serves to support the middle of the pipe P. As illustrated in FIGS. 1A and 1B, the secondary backup ring C4 is provided at the front of the primary backup ring C3, and also has a mounting part into which the pipe P is inserted.

The spring C5 and the spring guide C6 serve to buffer the pipe P when the pipe P is inserted. As illustrated in FIGS. 1A and 1B, the spring C5 and the spring guide C6 are provided between the primary backup ring C3 and the jaw holder C2, and the spring C5 is coupled across the spring guide C6 and the jaw holder C2.

The O-ring C7 serves to maintain airtightness, strengthen the coupling force between components, and prevent a push. The O-ring C7 may be provided between the primary backup ring C3 and the secondary backup ring C4 or between the secondary backup ring C4 and the spring guide C6. Desirably, the O-ring C7 may be provided both between the primary backup ring C3 and the secondary backup ring C4 and between the secondary backup ring C4 and the spring guide C6.

As described above, the pipe P is put into an open side of the present apparatus C, inserted into the insertion part, and sequentially passed through the jaw holder C2, the spring guide C6, the secondary backup ring C4 and the primary backup ring C3 so as to reach the rear end of the insertion part. Then, when the pipe P is separated, the pipe P is separated through a separation member referred to as a remover. FIG. 1A illustrates the embodiment in which the pipe P is being inserted, and FIG. 1B illustrates the embodiment in which the pipe P has been completely inserted.

In addition, FIG. 1C illustrates an apparatus C' in accordance with a second embodiment of the present disclosure. The present apparatus C' in accordance with the second embodiment is characterized in that the pipe P can be separated through only an operation of pressing the jaw holder C2, without using a remover. When a front pressing part C8 of the jaw holder C2 is pressed, the jaw holder C2 is moved backward. At this time, the present jaw J may rise along the inner inclined surface of the jaw holder C2, such that the pipe P can be easily separated.

The core feature of the present disclosure is the jaw which is mounted on the jaw holder C2 and tightens the outer surface of the pipe P to maintain the insertion of the pipe P. Thus, the following descriptions will be hereinafter focused on the detailed features of the present jaw J.

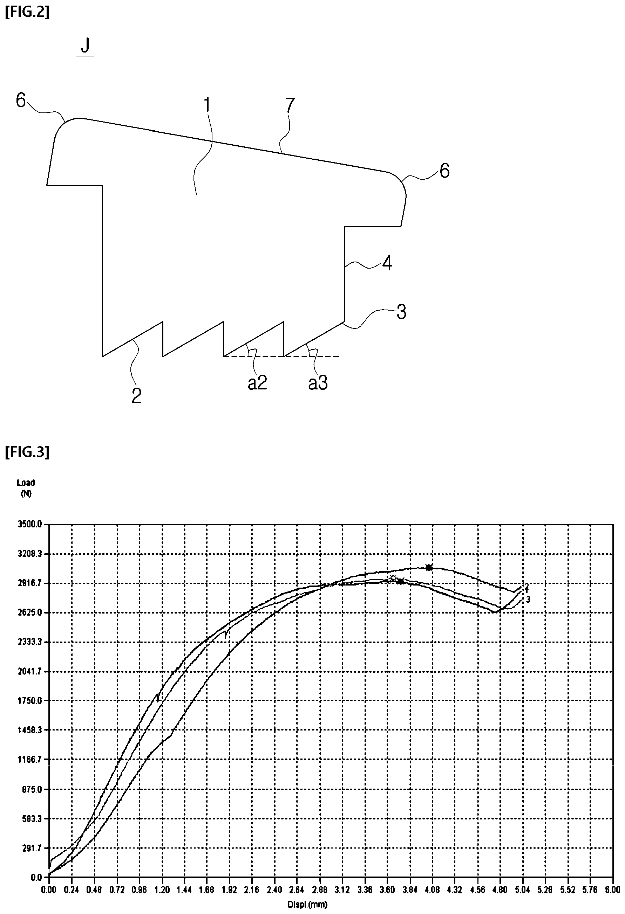

Referring to FIG. 2 which is a side view of the present jaw J, the present jaw J is mounted on the jaw holder C2 so as to fix the pipe P by tightening the outer surface of the pipe P. The present jaw J includes a body part 1, a blade part 2 provided on one side of the body part 1, a chamfered part 3 provided at the front of the blade part 2, and a front surface part 4 connected to the chamfered part 3.

Specifically, the body part 1 is inserted into the mounting part of the jaw holder C2 and coupled to the jaw holder C2. The body part 1 corresponds to the base of the present jaw J, and the other parts are integrated with the body part 1.

The blade part 2 serves to fix the pipe P by pressing the pipe P. As illustrated in FIG. 2, the blade part 2 is provided on one side of the body part 1, and includes a plurality of blades. The one side of the body part 1 may indicate the top or bottom thereof. When the jaw is provided at the top of the present apparatus C, the blade part 2 is provided at the bottom of the body part 1, and when the jaw is provided at the bottom of the present apparatus C, the blade part 2 is provided at the top of the body part 1. This configuration is only changed depending on the installation direction.

The chamfered part 3 serves to prevent the pipe P from being brought into surface contact with the jaw at a right angle, when the pipe P is inserted. As illustrated in FIG. 2, the chamfered part 3 is provided at the front of the blade part 2, and chamfered at a predetermined angle.

The front surface part 4 corresponds to the front surface of the present jaw J. The front surface part 4 is connected to the chamfered part 3, and formed perpendicular to the insertion direction of the pipe P. Based on the jaw provided at the top of the present apparatus C, a vertical wall surface extended upward from the chamfered part 3 becomes the front surface part 4.

In the present apparatus C having the above-described configuration and features, the front portion of the jaw is constituted by the front surface part 4 and the chamfered part 3, such that the chamfered part 3 prevents the pipe P from being scratched, when the pipe P is inserted. When it is assumed that only the front surface part 4 is provided, the pipe P may be scratched by the bottom of the front surface part 4 in case that the pipe P is inserted. However, when the chamfered part 3 is provided, the pipe P and the front surface part 4 are not brought into surface contact with each other at a right angle, which makes it possible to prevent a scratch.

In particular, as illustrated in FIG. 2, the chamfered part 3 may have a chamfer angle a3 which is equal to the angle between the end and valley of a blade, i.e. a blade angle a2. When the chamfer angle a3 and the blade angle a2 are set to the same value, the chamfered part 3 may be formed at the same time during a process of forming the blade, which makes it possible to improve the manufacturing performance.

More desirably, the chamfer angle a3 of the chamfered part 3 may be set to 30° with respect to the end of the blade part 2. At this time, the blade angle a2 may also be set to 30°. When the chamfer angle a3 is smaller than 30°, the pipe P may be scratched. When the chamfer angle a3 is larger than 30°, the blade angle a2 may be increased to reduce the tensile force of the pipe P.

In accordance with an embodiment of the blade part 2, the blade part 2 may have four blades, and the blade angle a2 of each blade may be set to 30°. Under the above-described condition, the tensile force of the pipe P may be maximized.

In addition, the present disclosure is characterized in that the present jaw J further includes a rounded part 6 formed at each of the front and rear ends of the upper portion of the body part 1 and a tapered part 7 formed at the top of the body part 1.

Specifically, as illustrated in FIG. 2, the rounded part 6 is formed at each of the front and rear ends of the upper portion of the body part 1, and rounded at a predetermined curvature. Such a rounded part 6 serves to facilitate the insertion of the present jaw J into the jaw holder C2. When the jaw rises as the pipe P is inserted, the rounded part 6 reduces the contact surface with the inner surface of the present apparatus C, which makes it possible to prevent the jaw J from being stuck in the present apparatus C. The curvature of the rounded part 6 may be set to such a value that a virtual circle including the rounded part 6 as a part of the circumference thereof has a radius of 0.5 to 1mm. When the radius of the virtual circle has a smaller value than the above-described range, the entire size of the rounded part 6 may be excessively reduced. When the radius of the virtual circle has a larger value than the above-described range, the rounded part 6 is less profitable than a rectangular corner. As a result, when the radius of the virtual circle is out of the range, the insertion performance and the sticking prevention effect by the rounded part 6 may be degraded.

As illustrated in FIG. 2, the tapered part 7 is provided at the top of the body part 1, and inclined downward toward the front. The tapered part 7 may be provided by tapering the present apparatus C toward the front, and exhibits an effect of improving the insertion performance of the present jaw J. Such a tapered part 7 may have an inclination angle of 6 to 10°.

When the inclination angle of the tapered part 7 is out of the range, the tensile force of a product may be reduced. Furthermore, when the inclination angle of the tapered part 7 is less than 6°, the length of the tapered part 7 may be increased. In this case, the length of the body part 1 may be increased to raise the material cost or the like. When the inclination angle of the tapered part 7 exceeds 10°, the inclination of the tapered part 7 is so sharp that the blades do not uniformly hold the pipe P.

Table 1 and FIG. 3 show experimental results for the tension forces of products as a basis for supporting this configuration. Table 1 and FIG. 3 show that an experimental group 1 in which the inclination angle of the tapered part 7 is set in the range of 6 to 10° and which corresponds to the middle based on the terminal values of FIG. 3 has an average maximum tensile force of 2930 N which is the largest value, an experimental group 2 in which the inclination angle of the tapered part 7 is set in the range of 11 to 15°, exceeding the above-described range, and which corresponds to the top based on the terminal values of FIG. 3 exhibits the maximum tensile force larger than that of the experimental group 1 in some sections, but has an average maximum tensile force of 2300 N which is lower than that of the experimental group 1, and an experimental group 3 in which the inclination angle of the tapered part 7 is set in the range of 3 to 5°, less than the above-described range, and which corresponds to the bottom based on the terminal values of FIG. 3 exhibits the maximum tensile force smaller than the experimental group 1 in most sections, and has an average maximum tensile force of 2500 N which is lower than that of the experimental group 1. The results of the tensile force test show that the tapered part 7 exhibits an excellent tensile force characteristic when the inclination angle of the tapered angle ranges from 6 to 10°.

**[Table 1]**

| Experimental group | Taper angle (°) | Average maximum tensile force (N) |
|---|---|---|
| 1 | 6 ~ 10 | 2930 |
| 2 | 11 ~ 15 | 2300 |
| 3 | 3 ~ 5 | 2500 |

The surface of the jaw may be scratched by frequent insertions and attachments/detachments of the pipe P. In this case, the jaw may be damaged due to corrosion or hardness reduction and lose its own function. Furthermore, the jaw may be separated by the water pressure or tensile force of the pipe P.

In order to solve such problems, the present disclosure suggests a method capable of adding corrosion resistance to the jaw through a pre-treatment and posttreatment, improving the hardness of the jaw, and securing the reliability of the material.

The present jaw J is characterized in that the present jaw J may be subjected to a pre-treatment using chrome (Cr) during a pre-treatment process, in order to raise corrosion resistance of the surface thereof.

In order to add the corrosion resistance, the present jaw J includes a coating part 5 formed on the outer surfaces of the body part 1, the blade part 2 and the front surface part 4.

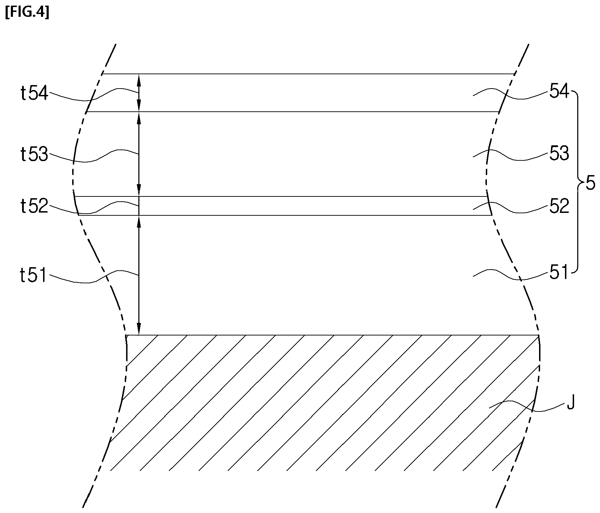

Specifically, as illustrated in FIG. 4, the coating part 5 includes a first coating layer 51 made of zinc (Zn), a second coating layer 52 stacked on the first coating layer 51 and made of an alloy of Zn and copper (Cu), a third coating layer 53 stacked on the second coating layer 52 and made of Cu, and a fourth coating layer 54 stacked on the third coating layer 53 and made of nickel (Ni).

More specifically, the first coating layer 51 is made of Zn which is a representative anti-corrosion material, and the surface of the jaw may be subjected to a solid solution heat treatment before the first coating layer 51 is stacked. After the pre-treatment using Cr, the first coating layer 51 made of Zn may be completely stacked.

The second coating layer 52 is made of an alloy of Zn and Cu. While Cu is stacked on the first coating layer 51, the alloy of Zn and Cu is formed through a wet etching method, an electrochemical etching method or the like.

The third coating layer 53 is made of Cu which is used as a kind of bonding metal for joining Zn and Ni.

The fourth coating layer 54 is made of Ni which serves to add corrosion resistance. Since Zn has a dark color, Zn may degrade the appearance of the jaw. Thus, the fourth coating layer 54 disposed at the outermost location may be made of Ni which can provide a glittering appearance.

For the structural stability and the best protection efficiency of the coating part 5, the thicknesses t51 to t54 of the first to fourth coating layers may be set to satisfy a condition of [thickness t51 of first coating layer 51 : thickness t52 of second coating layer 52 : thickness t53 of third coating layer 53 : thickness t54 of fourth coating layer 54 = 100 : 10 to 20 : 60 to 70 : 20 to 30] .

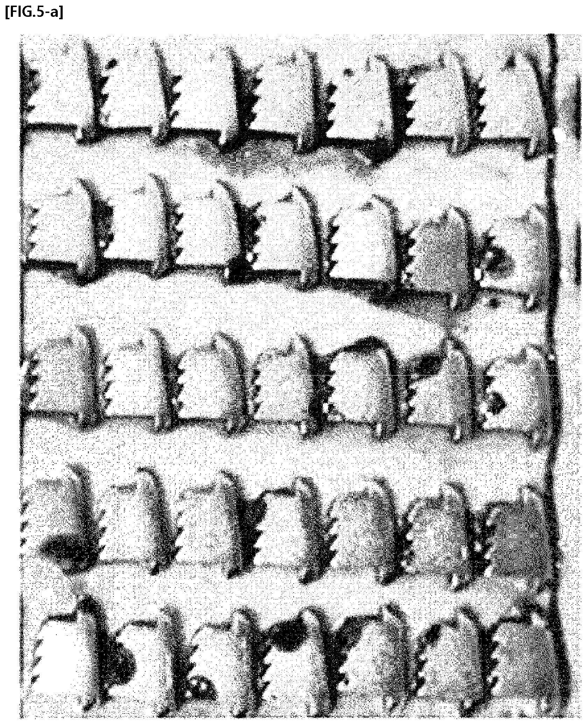

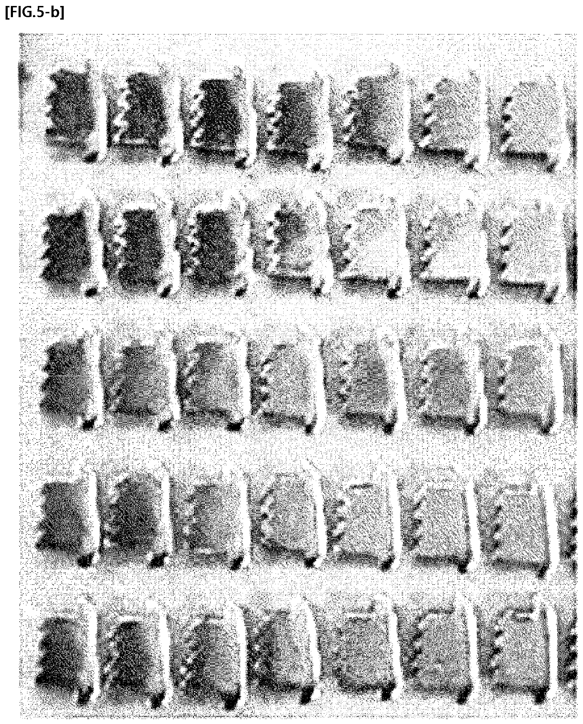

In order to evaluate the corrosion resistance of the coating part 5, the corrosion resistance of the coating part 5 and the corrosion resistance of a typical Zn coating were compared and evaluated. Table 2 shows a test method, and FIG. 5 shows the result of the test method.

**[Table 2]**

| Purpose | Evaluation of corrosion resistance of coating |
|---|---|
| Evaluation standard | KS D 8334 (Evaluation of coating corrosion resistance) |
| Test standard | KS D 9502 (Salt water spray test) |
| Temperature in chamber | 35°C (±2°C) |
| Air pressure | 0.07 ~ 0.17 Mpa |
| Salt water concentration | 5% NaCl 99.98% (First-class refined salt for industrial use) |
| Test time | 1440 hours |

As the test result, FIG. 5A shows that red rust and corrosion were observed in the Zn-coated jaw, but FIG. 5B shows that no red ruse and corrosion are observed in the present jaw J.

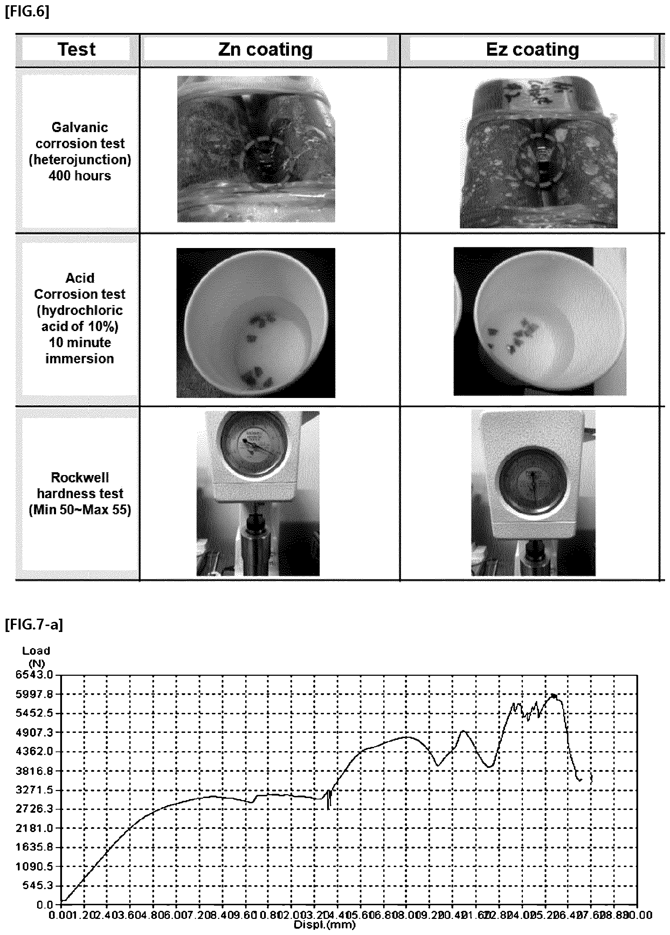

In order to check the corrosion resistance and hardness of the coating part 5 in the present jaw J, a galvanic corrosion test, an acid corrosion test, a Rockwell hardness test and the like were further performed. FIG. 6 shows the results thereof.

As shown in FIG. 6, the result of the galvanic corrosion test under a condition of 400-hour heterojunction shows that rapid corrosion by a potential difference from Cu as a heterojunction metal was observed in the Zn-coated jaw, but no corrosion was observed in the coating (referred to as an EZ coating of the present jaw J.

Furthermore, as shown in FIG. 6, the result of the acid corrosion test under a condition of 10-minute immersion with hydrochloric acid of 10% shows that the coating of the Zn-coated jaw completely came off due to a chemical reaction during the immersion such that the color of a solution was changed, but the coating of the present jaw J did not come off but was maintained. That is, the result shows that the acid resistance of the coating of the present jaw J was superior.

As shown in FIG. 6, the result of the Rockwell hardness test under a condition of Min 50 to Max 55 shows that the hardness of the Zn-coated jaw after the corrosion test was considerably reduced to about 33, but the hardness of the present jaw J after the corrosion test was about 51, which indicates that the hardness is normal.

With SUS pipes coupled to the present jaw J, the tests were additionally performed. The results of the tests show that the Zn coating layer around the exposed portion of the Zn-coated jaw was selectively dissolved, the diameter of the exposed portion was expanded, and rapid corrosion was observed. In the present jaw J, however, such problems were not observed.

In accordance with another embodiment for adding corrosion resistance, the coating part 5 may be made of Ni or high phosphorous electroless Ni. The coating part 5 made of Ni or high phosphorous electroless Ni also provides better corrosion resistance than the Zn-coated jaw.

In addition, the jaw in accordance with the present disclosure is characterized in that the blades of the blade part 2 can be manufactured through precise carbide cutting. Such a precise carbide cutting method can uniformize the shapes of the blades, compared to a pressing method. Thus, the tensile force of the jaw is improved.

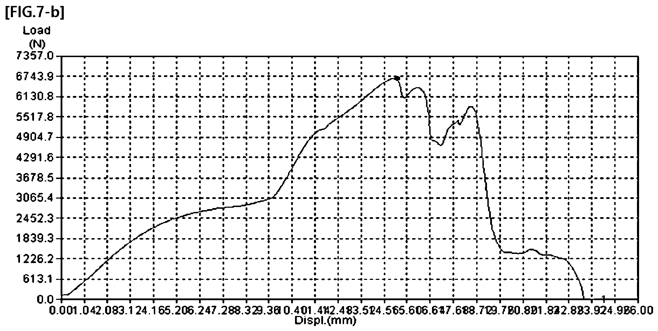

FIGS. 7A and 7B show results obtained by comparing the tensile force of a general jaw having blades manufactured through the general press cutting method to the tensile force of the present jaw J having the blade part 2 manufactured by the precise carbide cutting method.

FIG. 7A shows that the general jaw manufactured through the press cutting method has a maximum load of 5947.7 N, but FIG. 7B shows that the present jaw J manufactured through the precise carbide cutting method has a maximum load of 6688.1 N, which indicates that the tensile force of the present jaw J is superior.

While various embodiments have been described above, it will be understood to those skilled in the art that the embodiments described are by way of example only. Accordingly, the disclosure described herein should not be limited based on the described embodiments.

## Claims

1. A pipe joint apparatus comprising an insertion part into which a pipe (P) is inserted and a jaw (J) which is mounted on a jaw holder (C2), disposed to surround the circumference of the insertion part, and configured to fix the pipe (P) by tightening the outer surface of the pipe (P),
wherein the jaw (J) comprises:
a body part (1) coupled to the jaw holder (C2);
a blade part (2) provided on one side of the body part (1), and including a plurality of blades;
a chamfered part (3) provided at the front of the blade part (2), and chamfered at a predetermined angle; and
a front surface part (4) connected to the chamfered part (3), and formed perpendicular to the insertion direction of the pipe (P), **characterized in that**
the jaw (J) further comprises a coating part (5) formed on the outer surfaces of the body part (1),
the blade part (2) and the front surface part (4),
wherein the coating part (5) comprises a first coating layer (51) made of zinc (Zn), a second coating layer (52) stacked on the first coating layer (51) and made of an alloy of Zn and copper (Cu), a third coating layer (53) stacked on the second coating layer (52) and made of Cu, and a fourth coating layer (54) stacked on the third coating layer (53) and made of nickel (Ni).

2. The pipe joint apparatus of claim 1, wherein the chamfered part (3) has a chamfer angle (a3) equal to the angle between the end and valley of the blade.

3. The pipe joint apparatus of claim 2, wherein the chamfered part (3) is chamfered at an angle of 30° with respect to the end of the blade part (2).

4. The pipe joint apparatus of claim 1, wherein the thicknesses (t51; t52; t53; t54) of the first to fourth coating layers (51; 52; 53; 54) satisfy the following condition:
[thickness (t51) of first coating layer (51) : thickness (t52) of second coating layer (52) : thickness (t53) of third coating layer (53) : thickness (t54) of fourth coating layer (54) = 100 : 10 to 20 : 60 to 70 : 20 to 30].

5. The pipe joint apparatus of claim 1, wherein the jaw (J) further comprises a tapered part (7) provided at the top of the body part (1),
wherein the tapered part (7) has an inclination angle of 6 to 10°.

## Patentansprüche

1. Rohrverbindungsvorrichtung umfassend einen Einführteil, in den ein Rohr (P) eingeführt wird, und eine Klaue (J), die an einem Klauenhalter (C2) angeordnet ist, der so angeordnet ist, dass er den Umfang des Einführteils umgibt, und geeignet ist, das Rohr (P) durch Festziehen der Außenfläche des Rohrs (P) zu fixieren,
wobei die Klaue (J) umfasst:
einen Körperteil (1), der mit dem Klauenhalter (C2) verbunden ist;
einen Klingenteil (2), der auf einer Seite des Körperteils (1) angeordnet ist, und eine Vielzahl von Klingen umfasst;
einen abgeschrägten Teil (3), der an der Vorderseite des Klingenteils (2) angeordnet ist, und in einem vorbestimmten Winkel abgeschrägt ist; und
einen vorderen Oberflächenteil (4), der mit dem abgeschrägten Teil (3) verbunden ist, und senkrecht zur Einführungsrichtung des Rohrs (P) ausgebildet ist,
**dadurch gekennzeichnet, dass**
die Klaue (J) ferner einen Beschichtungsteil (5) umfasst, der auf den Außenflächen des Körperteils (1),
des Klingenteils (2) und des vorderen Oberflächenteils (4) ausgebildet ist,
wobei der Beschichtungsteil (5) umfassend eine erste Beschichtungsschicht (51) aus Zink (Zn), eine zweite Beschichtungsschicht (52), die auf der ersten Beschichtungsschicht (51) geschichtet ist, und aus einer Legierung aus Zn und Kupfer (Cu) besteht, eine dritte Beschichtungsschicht (53), die auf der zweiten Beschichtungsschicht (52) geschichtet ist und aus Cu besteht, und eine vierte Beschichtungsschicht (54), die auf der dritten Beschichtungsschicht (53) geschichtet und aus Nickel (Ni) besteht.

2. Rohrverbindungsvorrichtung nach Anspruch 1, wobei der abgeschrägte Teil (3) einen Abschrägungswinkel (a3) aufweist, der gleich dem Winkel zwischen dem Ende und dem Tal der Klinge ist.

3. Rohrverbindungsvorrichtung nach Anspruch 2, wobei der abgeschrägte Teil (3) in einem Winkel von 30° in Bezug auf das Ende des Klingenteils (2) abgeschrägt ist.

4. Rohrverbindungsvorrichtung nach Anspruch 1, wobei die Dicken (t51; t52; t53; t54) der ersten bis vierten Beschichtungsschicht (51; 52; 53; 54) die folgende Bedingung erfüllen:
[Dicke (t51) der ersten Beschichtungsschicht (51) : Dicke (t52) der zweiten Beschichtungsschicht (52) : Dicke (t53) der dritten Beschichtungsschicht (53) : Dicke (t54) der vierten Beschichtungsschicht (54) = 100 : 10 bis 20 : 60 bis 70 : 20 bis 30].

5. Rohrverbindungsvorrichtung nach Anspruch 1, wobei die Klaue (J) ferner einen sich verjüngenden Teil (7) umfasst, der an der Oberseite des Körperteils (1) angeordnet ist,
wobei der verjüngte Teil (7) einen Neigungswinkel von 6 bis 10° aufweist.

## Revendications

1. Appareil de raccord de tuyau comprenant une pièce d'insertion dans laquelle un tuyau (P) est inséré et une mâchoire (J) qui est montée sur un support de mâchoire (C2), disposée pour entourer la circonférence de la pièce d'insertion, et configurée pour fixer le tuyau (P) en serrant la surface extérieure du tuyau (P),
dans lequel la mâchoire (J) comprenant une partie de corps (1) couplée au support de mâchoire (C2) ;
une partie de lame (2) située sur un côté de la partie de corps (1) et comprenant une pluralité de lames ; une partie chanfreinée (3) située à l'avant de la partie de lame (2), et chanfreinée à un angle prédéterminé ; et
une partie de surface avant (4) reliée à la partie chanfreinée (3) et formée perpendiculairement à la direction d'insertion du tuyau (P), **caractérisée en ce que**
la mâchoire (J) comprenant en outre une partie de revêtement (5) formée sur les surfaces extérieures de la partie du corps (1), de la partie de la lame (2) et de la partie de la surface avant (4),
dans laquelle la partie de revêtement (5) comprenant une première couche de revêtement (51) en zinc (Zn), une deuxième couche de revêtement (52) empilée sur la première couche de revêtement (51) et constituée d'un alliage de Zn et de cuivre (Cu), une troisième couche de revêtement (53) empilée sur la deuxième couche de revêtement (52) et constituée de Cu, et une quatrième couche de revêtement (54) empilée sur la troisième couche de revêtement (53) et constituée de nickel (Ni).

2. Appareil de raccord de tuyau selon la revendication 1, dans lequel la partie chanfreinée (3) a un angle de chanfrein (a3) égal à l'angle entre l'extrémité et la vallée de la lame.

3. Appareil de raccord de tuyau selon la revendication 2, dans lequel la partie chanfreinée (3) est chanfreinée à un angle de 30° par rapport à l'extrémité de la partie de la lame (2).

4. Appareil de raccord de tuyau selon la revendication 1, dans lequel les épaisseurs (t51 ; t52 ; t53 ; t54) de la première à la quatrième couche de revêtement (51 ; 52 ; 53 ; 54) satisfont à la condition suivante : [épaisseur (t51) de la première couche de revêtement (51) : épaisseur (t52) de la deuxième couche de revêtement (52) : épaisseur (t53) selon la troisième couche de revêtement (53) : épaisseur (t54) de la quatrième couche de revêtement (54) = 100 : 10 à 20 : 60 à 70 : 20 à 30].

5. Appareil de raccord de tuyau de la revendication 1, dans lequel la mâchoire (J) comprenant en outre une partie conique (7) fournie au sommet de la partie du corps (1),
La partie conique (7) a un angle d'inclinaison de 6 à 10°.
